# EUROPEAN PATENT APPLICATION

(11) **EP 4 601 106 A1**
(43) Date of publication of application: **13.08.2025**
(21) Application number: 24873867.6
(22) Date of filing: 03.07.2024
(51) Int. Cl.: H01M 50/507

(54) **BUSBAR ASSEMBLY AND BATTERY PACK**

(30) Priority: 27.12.2023 CN 202323620256 U
(71) Applicant: Eve Energy Storage Co., Ltd., Wuhan Hubei 430200 (CN)
(72) Inventor: YOU, Shaobo, Wuhan, Hubei 430200 (CN)
(74) Representative: Herrero & Asociados, S.L.
(86) International application number: PCT/CN2024/103269
(87) International publication number: WO 2025/138685

(57) **Abstract**

The present disclosure discloses a busbar assembly and a battery pack. The busbar assembly includes: a busbar body provided with a positioning groove and a welding groove, where the welding groove is configured to be welded to a pole terminal of a cell, a spacing is reserved between the positioning groove and the welding groove; a temperature acquisition element adhesively fixed in the positioning groove.

## Description

The present disclosure claims priority to Chinese Patent Application No. 2023236202566, filed with the Chinese Patent Office on December 27, 2023, the disclosure of which is incorporated herein by reference in its entirety.

### TECHNICAL FIELD

The present disclosure relates to the technical field of batteries, and in particular, to a busbar assembly and a battery pack.

### BACKGROUND

Existing busbars in the market are connected with temperature acquisition elements, which facilitates monitoring battery temperature through the busbars and feeding data back to a battery management system (BMS), enabling the BMS system to implement corresponding control strategies. Currently, temperature acquisition elements are typically assembled to the busbars using adhesive dispensing processes. However, such processes rely heavily on operator experience and assembly verification as the basis for execution. Therefore, during actual adhesive dispensing processes, it is found that adhesive tends to overflow into welding grooves of the busbars, which affects welding effect and causes problems such as false welding, and there is room for improvements.

### SUMMARY OF INVENTION

### TECHNICAL PROBLEM

How to rapidly positioning and assembling temperature acquisition elements to reduce operational difficulty and improve work efficiency.

### TECHNICAL SOLUTION

According to a first aspect, the present disclosure provides a busbar assembly, which includes:
a busbar body provided with a positioning groove and a welding groove, where the welding groove is configured to be welded to a pole terminal of a cell; a spacing is reserved between the positioning groove and the welding groove;
a temperature acquisition element adhesively fixed in the positioning groove.

According to a second aspect, the present disclosure provides a battery pack which includes the busbar assembly described above.

### BENEFICIAL EFFECTS

By providing the positioning groove on the busbar body, and reserving a spacing between the positioning groove and the welding groove, after the temperature acquisition element is adhered to the positioning groove, overflow of the adhesive into the welding groove can be greatly limited, so that subsequent welding operations can be carried out more smoothly. Meanwhile, by providing the positioning groove on the busbar body, the temperature acquisition element can be rapidly positioned and assembled, thereby reducing the operational difficulty and improving work efficiency.

### BRIEF DESCRIPTION OF THE DRAWINGS

FIG. 1 is a schematic structural diagram of a busbar assembly according to an embodiment of the present disclosure;
FIG. 2 is a schematic structural diagram of a busbar assembly according to another embodiment of the present disclosure;
FIG. 3 is another schematic structural diagram of a busbar assembly according to an embodiment of the present disclosure;
FIG. 4 is a schematic structural diagram of a busbar assembly according to still another embodiment of the present disclosure.

Figures: 1, busbar body; 11, positioning groove; 12, welding groove; 13, first bus plate; 14, second bus plate; 2, regional partition line; 21, arc-shaped partition line; 22, straight partition line; 3, first region; 31, region I; 32, region III; 4, second region; 41, region II; 42, region IV; 5, temperature acquisition element; 6, pressure acquisition element.

### DETAILED DESCRIPTION

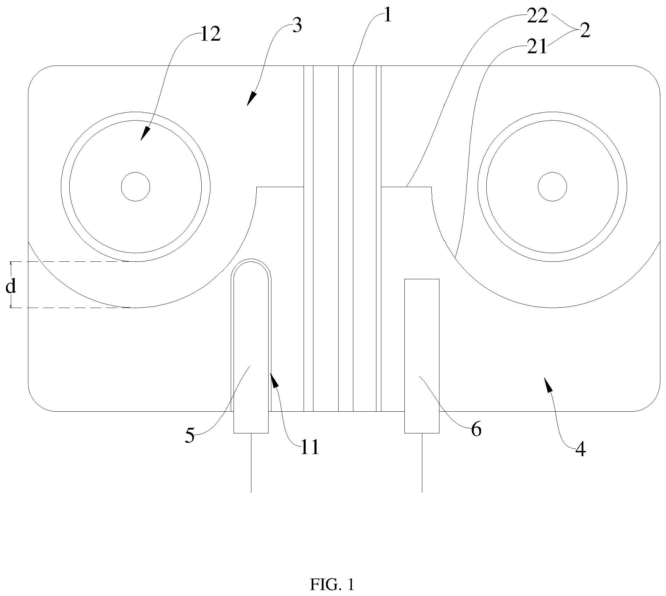

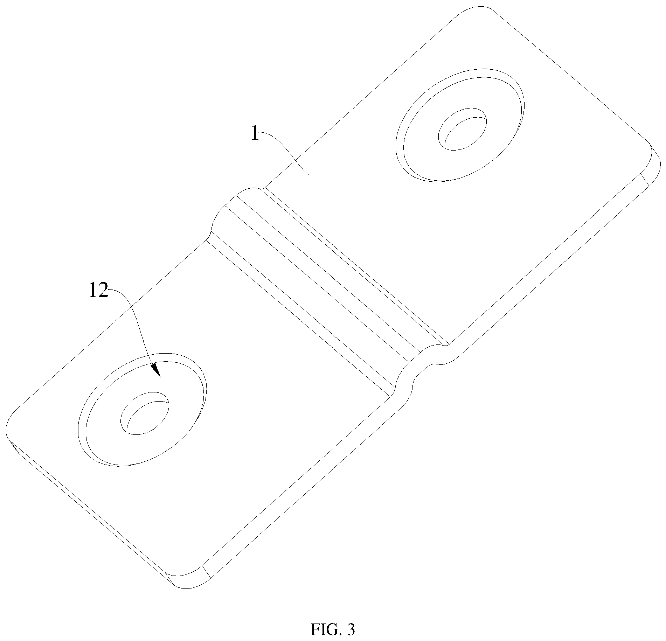

Referring to FIG. 1 to FIG. 4, embodiments of the present disclosure discloses a busbar assembly.

Referring to FIG. 1, in the embodiments of the present disclosure, the busbar assembly includes a busbar body 1 and a temperature acquisition element 5. The busbar body 1 is provided with a positioning groove 11 and a welding groove 12. The welding groove 12 is configured to be welded to a pole terminal of a cell. A spacing is reserved between the positioning groove 11 and the welding groove 12. The temperature acquisition element 5 is adhesively fixed in the positioning groove 11.

The inventor of the present disclosure found that in existing busbar assembly processes, the temperature acquisition element 5 is typically assembled to the busbar using adhesive dispensing processes, which causes adhesive to tend to overflow into the welding groove 12 of the busbar, thus affecting welding effect and causing issues such as false welding. Based on this, by providing the positioning groove 11 on the busbar body 1, and reserving a spacing between the positioning groove 11 and the welding groove 12, after the temperature acquisition element 5 is adhered to the positioning groove 11, overflow of the adhesive into the welding groove 12 can be greatly limited, so that subsequent welding operations can be carried out more smoothly. Meanwhile, by providing the positioning groove 11 on the busbar body 1, the temperature acquisition element 5 can be rapidly positioned and assembled, thereby reducing the operational difficulty and improving work efficiency.

In an embodiment, the temperature acquisition element 5 may be a temperature sensor, and a shape of the positioning groove 11 may be adapted to that of the temperature sensor, for example, rectangular or circular. In the illustrated embodiments, the positioning groove 11 is of an elongated rectangular shape.

Referring to FIG. 1, in an embodiment of the present disclosure, the busbar body 1 is provided with a regional partition line 2, which divides a top surface of the busbar body 1 into a first region 3 and a second region 4. The welding groove 12 is provided in the first region 3, while the positioning groove 11 is provided in the second region 4. By this arrangement, the top surface of the busbar body 1 can be divided into the first region 3 and the second region 4. The first region 3 is provided with the welding groove 12 and serves as a welding area, while the second region 4 is provided with the positioning groove 11 and serves as an assembly area for the temperature acquisition element 5. This can intuitively determine in which region to perform corresponding operations. On the one hand, the operational difficulty can be reduced and the work efficiency can be improved. On the other hand, the temperature acquisition element 5 can be kept away from the welding area, which can better protect the temperature acquisition element 5 and also improve the positioning of welding fixtures.

Referring to FIG. 1, in an embodiment of the present disclosure, a minimum spacing between the regional partition line 2 and the welding groove 12 is 6 mm. By this arrangement, it is found in actual welding that, controlling the spacing between the regional partition line 2 and the welding groove 12 to 6 mm or more can provide sufficient welding space for subsequent welding operations of the welding groove 12, thereby reducing operational difficulty and improving work efficiency. It is also more convenient for the positioning of welding fixtures. Moreover, the temperature acquisition element 5 will be farther away from the welding area, which can better protect the temperature acquisition element 5.

In an embodiment, the regional partition line 2 is formed by protruding from the busbar body 1. In this way, the regional partition line 2 and the busbar body 1 are integrally formed, and can be specifically manufactured through a pressing process. By pressing out the protruding regional partition line 2 on the busbar body 1, so that the regional partition line 2 can be directly machined on the busbar body 1, thereby improving work efficiency.

In another embodiments, the regional partition line 2 can also be injection-moulded on the busbar body 1. In this way, the regional partition line 2 is molded onto the busbar body 1 using injection molding, which is mature and convenient for manufacturing and production.

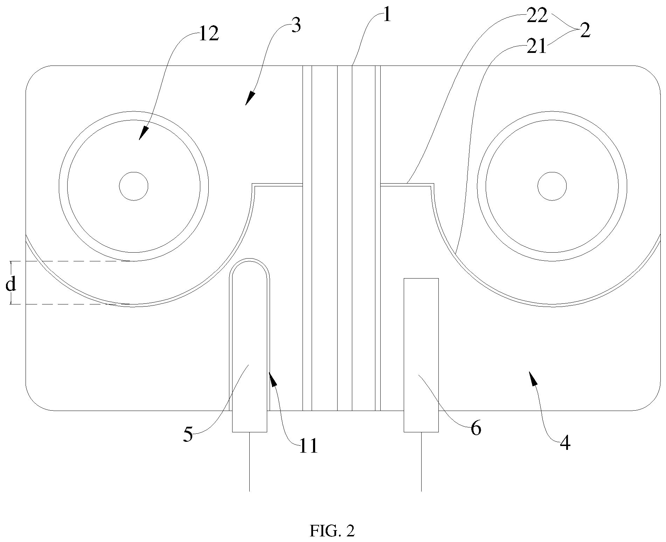

Referring to FIG. 2, in an embodiment of the present disclosure, the top surface of the busbar body 1 is provided with a concave region and a convex region protruding from the concave region, and a boundary line between the concave region and the convex region serves as the regional partition line 2. One of the concave region and the convex region is the first region 3, while the other is the second region 4. The concave region is formed concavely on the top surface of the busbar body 1. By this arrangement, the first region 3 and the second region 4 on the top surface of the busbar body 1 are more obvious, and operators can determine more intuitively in which region to perform corresponding operations, thereby further reducing the operational difficulty and improving work efficiency.

In the illustrated embodiments, the concave region is the first region 3, and the welding groove 12 is provided in the concave region; while the convex region is the second region 4, and the positioning groove 11 is provided in the convex region.

In other embodiments, the concave region is the second region 4, and the positioning groove 11 is provided in the concave region; while the convex region is the first region 3, and the welding groove 12 is provided in the convex region.

Referring to FIGs. 1 and 2, in an embodiment of the present disclosure, the regional partition line 2 includes an arc-shaped partition line 21 and a straight partition line 22 that are connected to each other. The arc-shaped partition line 21 and the welding groove 12 are arranged concentrically. By this arrangement, the structure is simple, the manufacturing and production are facilitated, and the manufacturing difficulty is reduced; and at the same time, the structure is more compact, thereby facilitating the miniaturized design of the busbar.

Referring to FIGs. 1 and 2, in an embodiment of the present disclosure, the arc-shaped partition line 21 is a semicircular partition line, with one end of the semicircular partition line extending to an edge of the busbar body 1 while the other end of the semicircular partition line being connected with the straight partition line 22. By this arrangement, the structure is simple, the manufacturing and production are facilitated, the manufacturing difficulty is reduced, and at the same time, welding fixtures alignment is facilitated.

Referring to FIGs. 1 and 2, in an embodiment of the present disclosure, a minimum spacing between the arc-shaped partition line 21 and the welding groove 12 is 6 mm. In the embodiments shown in FIGs. 1 and 2, the minimum spacing between the arc-shaped partition line 21 and the welding groove 12 is d, i. e., d ≥ 6 mm.

By this arrangement, it is found in actual welding that, controlling the spacing between the arc-shaped partition line 21 and the welding groove 12 to be 6 mm or more can provide sufficient welding space for subsequent welding operations of the welding groove 12, thereby reducing operational difficulty and improving work efficiency. It is also more convenient for the positioning of welding fixtures. Moreover, the temperature acquisition element 5 will be farther away from the welding area, which can better protect the temperature acquisition element 5.

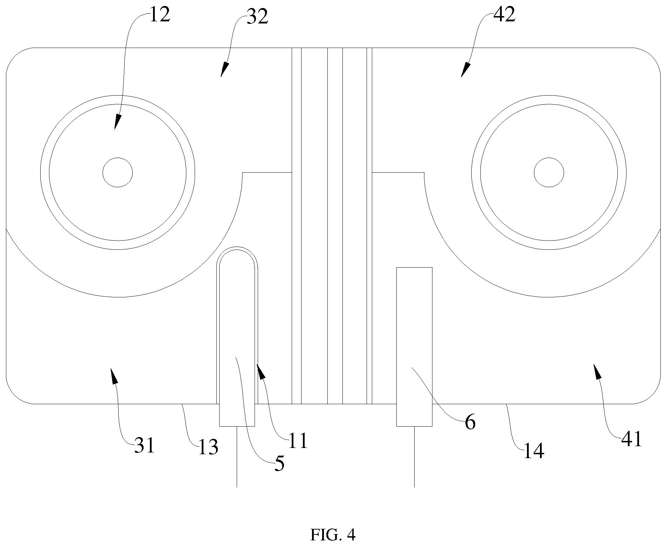

Referring to FIG. 4, in an embodiment of the present disclosure, the busbar body 1 includes a first bus plate 13 and a second bus plate 14 that are connected to each other. The positioning groove 11 is provided on the first bus plate 13. The busbar assembly further includes a pressure acquisition element 6 mounted on the second bus plate 14. Two welding grooves 12 are provided, and the two welding grooves 12 are provided on the first bus plate 13 and the second bus plate 14 in one-to-one correspondence. By this arrangement, the pressure acquisition element 6 and the temperature acquisition element 5 are provided on the busbar body 1, which can serve as a voltage collection point and a temperature collection point of the busbar body 1, can monitor the temperature and pressure of a battery simultaneously, and feeds back data to a BMS system, enabling the BMS system to implement corresponding control strategies, and the safety of the battery can be improved.

Referring to FIG. 4, in an embodiment of the present disclosure, two regional partition lines 2 are provided, and the two regional partition lines 2 are provided on the first bus plate 13 and the second bus plate 14 in one-to-one correspondence. On the first bus plate 13, one of the regional partition lines 2 divides a top surface of the first bus plate 13 into a region I 31 and a region II 41. The positioning groove 11 is provided in the region I 31, while one of the welding grooves 12 is provided in the region II 41. On the second bus plate 14, the other regional partition line 2 divides a top surface of the second bus plate 14 into a region III 32 and a region IV 42. The pressure acquisition element 6 is mounted in the region III 32, while the other welding groove 12 is provided in the region IV 42. By this arrangement, the temperature acquisition element 5 and the pressure acquisition element 6 are distanced from the two welding grooves 12 in a one-to-one manner, so that the temperature acquisition element 5 and the pressure acquisition element 6 can be better protected.

In an embodiment, the region I 31 and the region III 32 constitute the first region 3, and the region II 41 and the region IV 42 constitute the second region 4.

Referring to FIG. 4, in an embodiment of the present disclosure, the two regional partition lines 2 are arranged symmetrically. This arrangement is simple in structure, facilitates manufacturing and production, and reduces manufacturing difficulty.

The present disclosure further discloses a battery pack, which includes the busbar assembly described above. In an embodiment, the positioning groove 11 is provided on the busbar body 1, and a spacing is reserved between the positioning groove 11 and the welding groove 12, therefore, after the temperature acquisition element 5 is adhered to the positioning groove 11, overflow of the adhesive into the welding groove 12 can be greatly limited, so that subsequent welding operations can be carried out more smoothly. Meanwhile, by providing the positioning groove 11 on the busbar body 1, the temperature acquisition element 5 can be rapidly positioned and assembled, thereby reducing the operational difficulty and improving work efficiency.

## Claims

1. A busbar assembly, comprising:
a busbar body (1) provided with a positioning groove (11) and a welding groove (12); wherein the welding groove (12) is configured to be welded to a pole terminal of a cell; a spacing is reserved between the positioning groove (11) and the welding groove (12);
a temperature acquisition element (5) adhesively fixed in the positioning groove (11).

2. The busbar assembly according to claim 1, wherein the busbar body (1) is provided with a regional partition line (2); wherein the regional partition line (2) divides a top surface of the busbar body (1) into a first region (3) and a second region (4); wherein the welding groove (12) is provided in the first region (3), while the positioning groove (11) is provided in the second region (4).

3. The busbar assembly according to claim 2, wherein a minimum spacing between the regional partition line (2) and the welding groove (12) is 6 mm.

4. The busbar assembly according to claim 2, wherein the regional partition line (2) is formed by protruding from the busbar body (1);
or, the regional partition line (2) is injection-moulded on the busbar body (1).

5. The busbar assembly according to claim 2, wherein the top surface of the busbar body (1) is provided with a concave region and a convex region protruding from the concave region; wherein a boundary line between the concave region and the convex region serves as the regional partition line (2);
wherein one of the concave region and the convex region is the first region (3), while the other is the second region (4).

6. The busbar assembly according to claim 2, wherein the regional partition line (2) comprises an arc-shaped partition line (21) and a straight partition line (22) that are connected to each other; wherein the arc-shaped partition line (21) and the welding groove (12) are arranged concentrically.

7. The busbar assembly according to claim 6, wherein the arc-shaped partition line (21) is a semicircular partition line, with one end of the semicircular partition line extending to an edge of the busbar body (1) while the other end of the semicircular partition line being connected with the straight partition line (22);
wherein a minimum spacing between the arc-shaped partition line (21) and the welding groove (12) is 6 mm.

8. The busbar assembly according to claim 6, wherein the busbar body (1) comprises a first bus plate (13) and a second bus plate (14) that are connected to each other; wherein the positioning groove (11) is provided on the first bus plate (13); the busbar assembly further comprises a pressure acquisition element (6)mounted on the second bus plate (14);
wherein two welding grooves (12) are provided, and the two welding grooves (12) are provided on the first bus plate (13) and the second bus plate (14) in one-to-one correspondence.

9. The busbar assembly according to claim 8, wherein two regional partition lines (2) are provided, and the two regional partition lines (2) are provided on the first bus plate (13) and the second bus plate (14) in one-to-one correspondence;
on the first bus plate (13), one of the regional partition lines (2) divides a top surface of the first bus plate (13) into a region I (31) and a region II (41); wherein the positioning groove (11) is provided in the region I (31), while one of the welding grooves (12) is provided in the region II (41);
on the second bus plate (14), the other regional partition line (2) divides a top surface of the second bus plate (14) into a region III (32) and a region IV (42); wherein the pressure acquisition element (6) is mounted in the region III (32), while the other welding groove (12) is provided in the region IV (42);
wherein the two regional partition lines (2) are arranged symmetrically.

10. A battery pack, comprising the busbar assembly according to any one of claims 1 to 9.
